# EUROPÄISCHE PATENTSCHRIFT

(11) **EP 3 141 436 B1**
(45) Veröffentlichungstag und Bekanntmachung des Hinweises auf die Patenterteilung: **08.05.2019**
(21) Anmeldenummer: 16188034.9
(22) Anmeldetag: 09.09.2016
(51) Int. Cl.: B60R 21/02, B60R 21/04, B60N 2/24, B64D 11/00, B64D 11/06, B60R 21/16, B60R 21/00, B60R 21/045, B60R 21/231

(54) **FAHRZEUG MIT WENIGSTENS EINEM STEHPLATZ FÜR EINEN STEHENDEN FAHRER UND/ODER EINEN STEHENDEN FAHRGAST**
VEHICLE HAVING AT LEAST ONE STANDING PLACE FOR A STANDING DRIVER AND/OR A STANDING PASSENGER
VEHICULE COMPRENANT AU MOINS UNE PLACE DEBOUT POUR UN CONDUCTEUR DEBOUT ET/OU UN PASSAGER DEBOUT

(30) Priorität: 09.09.2015 DE 102015115200
(43) Veröffentlichungstag der Anmeldung: 15.03.2017
(73) Patentinhaber: INFATEC Consulting für innovative Fahrzeugtechnik mbH, 48167 Münster (DE)
(72) Erfinder: Schimmelpfennig, Karl-Heinz, 48167 Münster (DE)
(74) Vertreter: Tarvenkorn, Oliver

(56) Entgegenhaltungen:
- EP-A1- 1 127 788
- WO-A1-00/38959
- CA-A1- 2 696 407
- DE-A1- 19 518 116
- DE-A1- 19 544 266
- DE-A1-102013 214 779
- DE-C- 836 748
- DE-C1- 19 814 548
- US-A- 3 603 535

## Beschreibung

Die Erfindung betrifft ein Fahrzeug mit wenigstens einem Stehplatz für einen stehenden Fahrer und/oder einen stehenden Fahrgast, mit einem Frontbereich, der wenigstens eine Stoßenergie absorbierende Knautschzone aufweist.

Kraftfahrzeuge, die für den Einsatz im öffentlichen Straßenverkehr bestimmt sind, erfordern regelmäßig einen Sitzplatz für den Fahrer sowie meist auch für alle weiteren Fahrgäste. Ausnahmen sind beispielsweise im öffentlichen Personennahverkehr zugelassen, jedoch gibt auch für Kurzstreckenflüge bereits Überlegungen zur Einführung von Stehsitzen.

Die heutzutage bei Straßenfahrzeugen verbreiteten Sicherungssysteme wie insbesondere Sicherheitsgurt und Airbag sind nur im Zusammenhang mit einer sitzenden Position der Personen wirksam, um mit einem an der Fahrzeugvorderseite und gegebenenfalls einem weiteren am Fahrzeugheck vorhandenen Verformungsbereich, der sogenannten Knautschzone, ein aufeinander abgestimmtes Sicherungssystem zu bilden. Im Falle eines Aufpralls erfolgt eine gemeinsame Verzögerung des so gesicherten Fahrers bzw. der so gesicherten Fahrgäste zusammen mit der Fahrzeugzelle. Die Knautschzonen dienen dazu, die auf die Insassen wirkenden Verzögerungskräfte zu reduzieren. Auf diese Weise kann bei modernen Fahrzeugen ein Überleben der Fahrzeuginsassen bei einem Aufprall auf ein Hindernis mit einer Relativgeschwindigkeit von etwa 50 km/h als wahrscheinlich angenommen werden. Das Einsteigen ins Fahrzeug, das Einnehmen der Sitzposition sowie das Anlegen des Sicherheitsgurtes ist eine Prozedur, die gerade bei nur sehr kurzen Fahrtstrecken, vor allem innerorts, als sehr lästig empfunden wird. Auslieferungstätigkeiten von Zustellern, bei denen das Fahrzeug häufig bestiegen und wieder verlassen werden muss, sind wirtschaftlich kaum durchzuführen, wenn der Fahrer bei jedem Stopp des Fahrzeugs die Sitzposition einnehmen und sich abschnallen muss sowie anschließend, nach dem Einstieg, den Sicherheitsgurt wieder anlegen muss.

Die CA 2696407 A1 zeigt ein Nutzfahrzeug, bei dem der Fahrersitz mit hochgeschwenkter Sitzfläche in normaler, sitzender Position benutzt werden kann, wobei die Sitzfläche aber auch heruntergeklappt werden kann, sodass der Fahrer in einer stehend angelehnten Haltung das Fahrzeug steuern kann.

Auch bei anderen Nutzfahrzeugen, beispielsweise beim Einsatz von Rettungskräften oder im militärischen Bereich, ist es wünschenswert, ein schnelles Auf- und Absitzen des Fahrers und der weiteren Einsatzkräfte zu ermöglichen. Der Nachteil bei der nach CA 2696407 A1 bekannten Lösung besteht jedoch darin, dass der Fahrer in seiner stehend angelehnten Position für den Fall eines Aufpralls völlig ungeschützt ist, da keinerlei zusätzliche Sicherungssysteme vorgesehen sind.

Ein Stehsitz für stehend beförderte Fahrgäste in öffentlichen Verkehrsmitteln ist aus der DE 198 14 548 C1 bekannt. Auch hier ermöglicht eine nur wenig vorspringende Sitzbank eine stehend angelehnte Haltung. Transparente Rollos vor und hinter dem Fahrgast bilden ein Rückhaltesystem. Im Falle einer starken Bremsung wird der Fahrgast gegen das transparente, weiche Rückhaltesystem geschleudert, ohne sich ernsthaft zu verletzen. Dieses für Busse konzipierte System ist jedoch auf andere Fahrzeuge nicht übertragbar, insbesondere ist es nicht für Fahrerplätze geeignet, da der Fahrer eine ungehinderte Sicht und einen ungehinderten Zugriff auf das Lenkrad und weitere Bedienelemente haben muss. Zu berücksichtigen ist auch, dass Busse aufgrund ihrer Masse im Zweifel den stärkeren Unfallteilnehmer bilden und bei einem Aufprall auf einen Personenwagen ohnehin wesentlich geringeren Verzögerungen ausgesetzt sind.

Stehend bedienbare sonstige Fahrzeuge werden daher weniger im öffentlichen Straßenverkehr benutzt, sondern werden insbesondere zur Beförderung außerhalb des öffentlichen Straßenverkehrs auf Golfplätzen eingesetzt und sind beispielsweise in der WO 2006/032275 A2 oder JP 62101586 A gezeigt.

Auch bei in Betriebstätten genutzten Flurförderfahrzeugen, z. B. gemäß EP 0 568 775 B1, ist teilweise eine stehende Position des Fahrers vorgesehen, wobei auch hier keinerlei Sicherungssysteme vorgesehen sind.

Die Aufgabe der vorliegenden Erfindung besteht somit darin, bei einem Fahrzeug der eingangs genannten Art eine Fahrzeugführung durch einen stehenden Fahrer und/oder eine Beförderung von Fahrgästen im Stehen bzw. einer stehend angelehnten Haltung zu ermöglichen und dabei zugleich eine Sicherung von Fahrer und/oder Fahrgästen für den Fall eines Unfalls vorzusehen.

Diese Aufgabe wird erfindungsgemäß durch ein Fahrzeug mit den Merkmalen des Anspruchs 1 gelöst.

Dieses Fahrzeug baut in der Grundkonstruktion auf bestehenden Fahrzeugzellen auf, die im Frontbereich vor und/oder hinter den massiv ausgebildeten Teilen des Antriebsstrangs eine verformbare Zone, die sogenannte Knautschzone, aufweisen, wobei in der Regel auch für den Fall eines Heckaufpralls im Heckbereich des Fahrzeugs ein weiterer Verformungsbereich vorgesehen ist.

Das erfindungsgemäße Fahrzeug nutzt also die im Stand der Technik bereits erreichte Reduzierung der auf den menschlichen Körper einwirkenden Verzögerungskräfte durch bauliche Maßnahmen. Fahrer und Fahrgäste befinden sich bei dem erfindungsgemäßen Fahrzeug unabhängig davon, ob sie freistehend, an einen Stehsitz angelehnt oder mit einer zusätzlichen hochklappbaren Sitzfläche in halb sitzender Position fahren, immer zwischen einem vorderen und einem hinteren Auffangelement, welches nachgiebig ausgebildet ist und damit nicht nur eine mechanische Rückhaltefunktion erfüllt, sondern insbesondere stoßabsorbierend, also energieverzehrend ist.

Erfindungsgemäß geht also die Stoßdämpfung oder Stoßabsorption über eine reine Polsterung zur Abminderung schwerster Verletzungen bei den im innerstädtischen Verkehr vorherrschenden Geschwindigkeiten deutlich hinaus. Außerdem sind die Auffangelemente frei von innenliegenden, harten Versteifungselementen, um das ungehinderte Eintauchen des Körpers in die Auffangelemente bis zur maximalen elastischen Kompression oder maximalen weichplastischen Verformung der Schicht(en) in den Auffangelementen zu ermöglichen.

Die Erfindung zielt darauf ab, die Verzögerung des Körpers zwar weitgehend gleichzeitig mit der Fahrgastzelle zu initiieren, diese aber soweit wie möglich von der Fahrgastzelle zu entkoppeln. Der Körper kann nach der Erfindung von der sonstigen Fahrzeugzelle und dem Chassis teilweise unabhängig allein innerhalb der nachgiebigen Auffangelemente gebremst werden, indem seine kinetische Energie durch elastische und/oder plastische Verformung absorbiert wird. Die einzige Verbindung des Körpers zur Fahrgastzelle besteht indirekt, da die Auffangelemente, auf die er aufprallt, als solche mit der Fahrgastzelle verbunden sind. Die Verbindung erfolgt selbstverständlich nur in den Bereichen, die nicht die Anprallseite darstellen.

Anders als bei den bekannten Rückhaltesystemen, die den Körper an die Fahrgastzelle koppeln und den Körper damit zwangsläufig mit derselben Verzögerung bzw. negativen Beschleunigung belasten wie die Fahrgastzelle, wenn nicht sogar stärker, kann nach der Erfindung der Verzögerungsweg und damit die Verzögerungszeit ausgedehnt werden. Entsprechend sinkt die auf den Körper wirkende Beschleunigung. Anschaulich gesprochen kann sich bei dem Fahrzeug nach der Erfindung der Körper noch innerhalb der nachgiebigen Schaumschichten oder sonstigen Schichten, die die Auffangelemente bilden, weiterbewegen, wenn die Fahrgastzelle bereits zum Stillstand gekommen ist.

Außerdem bilden die Auffangelemente eine sehr breite Auffangfläche, die vorzugsweise sogar breiter ist als die Anprallfläche des Körpers des Fahrers oder Passagiers ist, so dass im Falle eines Aufpralls der Körper des Insassen vollflächig gegen die Auffangfläche geschleudert wird und im weiteren Verlauf des Unfalls dann gegen die rückwärtige Auffangfläche zurückgeschleudert wird. Eine punktuelle Überbelastung einzelner Körperregionen wird durch die großflächige Verteilung vermieden. Die Auffangflächen erstrecken sich dabei bis über den Körperschwerpunkt hinaus nach oben und enden vorzugsweise so weit unterhalb der Schultergelenke, dass zumindest der Fahrer und ggf. auch die Insassen die Arme bequem auf der Oberseite der Auffangelemente oder an sonstigen geeigneten Auflageflächen ablegen können. Der Körperschwerpunkt ist auf Höhe des Oberbauches anzunehmen, so dass sich die Auffangelemente entsprechend zumindest bis auf Brusthöhe erstrecken sollte.

Das Lenkrad, oder ein bügelförmiger Lenker wie er bei Zweirädern und Quads üblich ist, ist nach der Erfindung mit den weiteren notwendigen Bedienelementen von oberhalb des vorderen Auffangelements frei zugänglich. Ein Kontakt des Oberkörpers des Fahrers mit dem Lenkrad und anderen Bedienelementen bei einem Unfall wird somit auch dann vermieden, wenn der Fahrer an die vordere Auffangfläche geschleudert wird und es zu einer starken Verformung des dortigen Auffangelements kommt.

Vorzugsweise ist die Rückhaltevorrichtung so ausgebildet, dass sie den Oberkörper der Insassen nicht nur in projizierter Fläche vorwärts und rückwärts zur Fahrtrichtung, sondern vollumfänglich umschließt. Das vordere und das hintere Auffangelement als nach der Erfindung vorgesehene Mindestausstattung sind dazu um ein in der Fahrzeugmitte angeordnetes Mittelteil ergänzt und zu einer von oben gesehen hufeisenförmigen Struktur erweitert. Die verbleibende seitliche Lücke in diesem Ring dient dem leichten Ein- und Aussteigen von der Fahrzeugseite her.

Erfindungsgemäß wird also ein sehr sicheres Fahrzeug bereitgestellt, das zudem ein schnelles Zu- und Aussteigen von allen Insassen ermöglicht und sich damit insbesondere für Lieferdienste, Postzustellung sowie für militärische Einsatzszenarien eignet, also für solche Anwendungsfelder, in denen ein häufiges, schnelles Zusteigen und Verlassen möglich sein soll.

Die auf der Einstiegsseite noch verbleibende Öffnung wird vorzugsweise durch ein Zusatz-Auffangelement geschlossen, welches an der Innenseite einer Fahrzeugtür befestigt ist. Mit dem Schließen der Fahrzeugtür wird somit ein Ring komplett um den Fahrer bzw. die anderen Insassen herum gelegt, sodass auch ein Schutz für den Fall eines Seitenaufpralls gegeben ist. Auch für diesen Unfalltyp ergibt sich eine gute Schutzwirkung, weil die hochgezogene Rückhaltevorrichtung frühzeitig den Körper im Schwerpunkt aufhält und daher keine seitlichen Überstreckungen der Wirbelsäule möglich sind. Auch bei einem rundum angeordneten Auffangelement kann ein bequemes Aus- und Zusteigen ermöglicht werden, weil die Ausstiegsöffnung automatisch beim Schließen der Tür mit gesichert wird. Außer der erhöhten Bequemlichkeit für den innerörtlichen Kurzstreckenverkehr ist auch ein wirtschaftlicher Vorteil durch das erfindungsgemäße Fahrzeug gegeben, da die Kosten für Installation und Wartung sowie spätere Entsorgung der hoch entwickelten Sicherungssysteme einschließlich Sensoren und Pyrotechnik entfallen können. Der Sicherheitsgurt selbst kann ebenso entfallen wie die damit im Zusammenhang stehenden Zusatzsysteme wie Gurtstraffer und Gurtkraftbegrenzer. Auch die frontal angeordneten Airbags einschließlich der zugehörigen Sensorik werden zumindest außerhalb des Fahrerplatzes nicht mehr benötigt. Durch den Entfall der Airbags wird auch die Gefahr für Unfallhelfer gemindert, die durch verzögert ausgelöste Airbags erheblich verletzt werden können. Statt den Körper an einer relativ schmalen Fläche zurückzuhalten, wie beim Sicherheitsgurt, wird nach der Erfindung eine über die Körperfläche gleichmäßig verteilte Belastung erreicht. Belastungsspitzen während des Unfallgeschehens werden reduziert, so dass die maximal zulässigen biomechanischen Belastungswerte bei einem normierten, auf den innerstädtischen Verkehr bezogenen Unfallgeschehen unterschritten werden.

Ein zusätzliches Rückhalteelement kann vorgesehen sein, um die Insassen für den Fall eines Fahrzeugüberschlags zusätzlich zu schützen, indem sie in dem rundum gesicherten Stehplatz auch gegenüber vertikal wirkenden Kräften festgehalten werden. Dies kann durch ein einfaches Beckengurtsystem bewirkt werden oder insbesondere durch eine nicht-lineare vertikale Erstreckung der Auffangelemente, so dass die Person auch in vertikaler Richtung zurückgehalten wird.

Eine bevorzugte Ausführungsform sieht einen kurzen, wenig vorspringenden Stehsitz vor, der sich vor der hinteren Auffangfläche befindet und der höhenverstellbar angeordnet ist. Zusätzlich ist vorzugsweise ein in der Höhe veränderbares Bodenpodest vorgesehen. Mit diesen Maßnahmen kann erreicht werden, dass die Armhöhe des Fahrers konstant ist, sodass dieser die oberhalb des vorderen Auffangelements befindlichen Lenk- und Bedienelemente unabhängig von seiner eigenen Körpergröße bequem erreichen und bedienen kann. Dazu ist die Höhe des vorderen Auffangelements vorzugsweise auf einen sogenannten Norm-Menschen mit einer Durchschnittshöhe von 1,75 m abgestimmt. Wesentlich größere Fahrer mit einer Größe von 1,90 m und mehr können den Stehsitz absenken, um in einer leicht abgestützten, mit den Beinen schräg nach unten verlaufenden Haltung die eigene Schulterhöhe abzusenken. Kleine Personen mit einer Größe von etwa 1,60 m hingegen können durch Verstellung des Bodenpodestes und des Stehsitzes in eine erhöhte Position gebracht werden, so dass die Schulterhöhe angehoben wird.

Eine weitere bevorzugte Ausführungsform sieht vor, die Auffangelemente so verstellbar zu machen, dass der Abstand zum Körper des Fahrers in Bezug auf die Fahrzeuglängsachse, ggf. auch in Bezug auf die Fahrzeugquerachse, leicht variiert werden kann. Der Abstand wird vorzugsweise so gewählt, dass er nur etwas größer ist als die sogenannte Gurtlose bei herkömmlichen Fahrzeugen, also als der Weg, der im Falle eines Unfalls ohne Rückhaltwirkung des Sicherheitsgurtes zurückgelegt wird, bis dieser gespannt am Körper des Insassen anliegt und diesen zurückhält.

Vorgesehen sein kann noch, dass die Auffangelemente zonenweise unterteilt sind und die Zonen aus unterschiedlich nachgiebigen Werkstoffen gebildet sind. Die näher zu der Person angeordneten Schichten sollten dabei weicher sein als die dahinter liegenden. Der anprallende Körper wird somit zunächst weich aufgefangen und es wird aufgrund der Nachgiebigkeit der äußeren Schicht eine gute Druckverteilung erreicht, so dass eine vollflächige Belastung der gesamten Körperfläche erfolgt und nicht nur eine punktuelle Abstützung an einzelnen, exponierten Flächenbereichen.

Eine Abstufung der Härte der Auffangelemente kann auch in der Höhe erfolgen, da aufgrund der geringeren Masse des Unterkörpers der Impuls beim Anprall dort weniger stark ist. Hierdurch ist es auch möglich, den unteren Bereich eines Auffangelements rückspringend auszuführen, indem durch eine größere Härte des Werkstoffes ein geringerer Verformungsweg vorgesehen wird und der eingesparte Verformungsweg zur Vergrößerung des Fußraums und damit zur Bequemlichkeit des stehenden Fahrers oder Fahrgastes genutzt wird. Im Fußraum können auch Tast- oder Pedalelemente angeordnet sein, um das Fahrzeug in Gang zu setzen und zu bremsen.

Vorzugsweise ist die Abstufung der Werkstoffhärte in Fahrzeuglängsrichtung mit dem Verlauf der Knautschzonen harmonisiert, sodass die im zeitlichen Verlauf des Unfallgeschehens auftretenden Belastungen in Form von unterschiedlich starken Verzögerungen vergleichmäßigt werden und Spitzenwerte der Belastung auf ein für den menschlichen Körper erträgliches Maß reduziert werden.

Weiterhin vorzugsweise ist die Nachgiebigkeit der Auffangelemente so ausgelegt, dass zunächst eine vollflächige Anlage des Körpers erreicht wird und dann bei dem zu erwartenden Unfalllgeschehen der Verzögerungsweg über den durch die jeweils betroffene Knautschzone ermöglichten Verformungsweg hinausgeht. Die Verzögerungszeit, also die Zeitspanne zwischen Unfalleintritt und Stillstand des Körpers des Fahrzeuginsassen gegenüber dem Grund wird verlängert. Entsprechend sinkt die Beschleunigung als Ableitung der Geschwindigkeit nach der Zeit und folglich die damit einhergehenden Rückhaltekräfte, die auf den Körper wirken.

Die Erfindung wird nachfolgend mit Bezug auf die in den Zeichnungen dargestellten Ausführungsbeispiele näher erläutert. Die Figuren zeigen im Einzelnen:
- Fig. 1: ein Fahrzeug mit vier Stehplätzen in einem schematischen Grundriss;
- Fig. 2: ein Fahrzeug mit zwei Stehplätzen in einem schematischen Grundriss;
- Fig. 3a, 3b: das Fahrzeug gemäß Fig. 1 gemäß einer ersten Ausführungsform in seitlicher Ansicht; und
- Fig. 4: das Fahrzeug gemäß Fig. 1 gemäß einer zweiten Ausführungsform in seitlicher Ansicht;
- Fig. 5a: eine schematische Ansicht auf einen Oberkörper eines sitzenden Fahrers mit Sicherheitsgurt nach dem Stand der Technik;
- Fig. 5b: eine schematische Ansicht auf einen Oberkörper eines stehenden Fahrers in einem Stehplatz nach der Erfindung;
- Fig. 6a: ein vereinfachtes Zeit-Geschwindigkeitsdiagramm für einen Unfallablauf an einem herkömmlichen Fahrzeug und
- Fig. 6b: ein vereinfachtes Zeit-Geschwindigkeitsdiagramm für einen Unfallablauf an einem erfindungsgemäßen Fahrzeug.

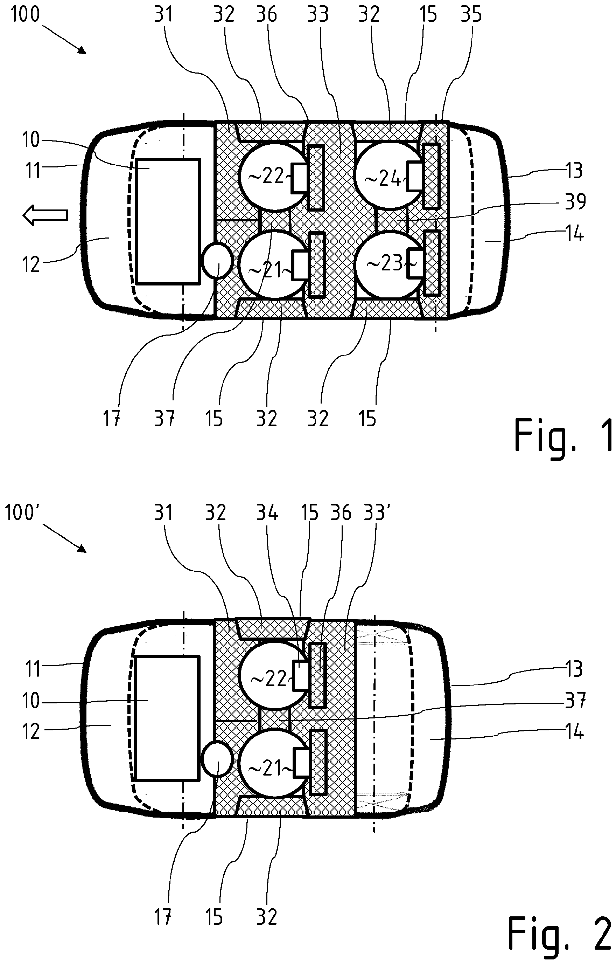

In Fig. 1 ist ein Fahrzeug 100 in einem Grundriss gezeigt, wobei es sich um einen vierrädrigen Personenkraftwagen für vier Personen handelt. In der Zeichnung befindet sich links ein Frontbereich 11; der Pfeil gibt die Fahrtrichtung bei Vorwärtsfahrt an. Entsprechend befindet sich am rechten Bildrand ein Heckbereich 13 des Fahrzeuges 100. Im Frontbereich 11 des Fahrzeugs 100 ist ein Motor 10 angeordnet, der weitgehend unverformbar ist. Der Bereich zwischen dem Motor 10 und der Fahrzeugvorderseite 11 ist als Knautschzone 12 so ausgebildet, dass er sich bei einem Zusammenstoß mit einem anderen Fahrzeug oder einem Hindernis kontinuierlich verformt, wodurch die auf die Insassen wirkende Verzögerung reduziert wird. Eine weitere Knautschzone 14 befindet sich im Heckbereich 13.

Die gestrichelten Linien kennzeichnen in Fig. 1 wie auch in den folgenden Figuren. die Verkürzung der Fahrzeugfront 11 und des Fahrzeughecks 13 nach einer unfallbedingten Verformung.

In dem Fahrzeug 100 sind vier Stehplätze 21, 22, 23, 24 ausgebildet. Der Stehplatz 21 ist für den Fahrer vorgesehen und der Stehplatz 22 für den Beifahrer. Im Fond sind zwei weitere Stehplätze 23, 24 für weitere Fahrgäste vorgesehen.

Vor den Stehplätzen 21, 22 befindet sich ein vorderes Auffangelement 33. Oben darauf aufliegend ist ein Lenkerbügel oder ein Lenkrad 17 angeordnet. Hinter den vorderen Stehplätzen 21, 22 befindet sich ein Auffangelement 33, das als hinteres Auffangelement für die Personen auf den vorderen Stehplätzen 21, 22 dient und zugleich ein vorderes Auffangelement für die Fahrgäste auf den hinteren Stehplätzen 23, 24 bildet. Hinter der zweiten Reihe ist ein hinteres Auffangelement 35 angeordnet.

Zur seitlichen Abstützung dienen zunächst Trennelemente 37, 39, die jeweils zwischen den in einer Reihe nebeneinanderstehenden Fahrgästen angeordnet sind. An den Innenseiten aller vier Fahrzeugtüren 15 sind zudem Zusatz-Auffangelemente 32 angeordnet, so dass sich bei geschlossenen Fahrzeugtüren 15 auf jedem der Stehplätze 21,...,24 ein vollständiger Ring aus Auffangelementen 31...37 um den Fahrer und die Fahrgäste legt.

An jedem Stehplatz 21,...,24 ist zudem jeweils eine Kopfstütze 36 vorgesehen, die über die sonstigen Auffangelemente 31, 32, 33, 35, 37, 39 hinweg nach oben ragt. Ein kleiner Stehsitz 34 an jedem Stehplatz 21, 22, 23, 24 ermöglicht den Personen, eine bequeme, angelehnte Haltung einzunehmen.

In Fig. 2 ist ein Fahrzeug 100' im Grundriss gezeigt, wobei es sich um einen vierrädrigen Personenkraftwagen für zwei Personen handelt. Die zuvor beschriebenen Baugruppen sind in Aufbau und Funktion überwiegend identisch zur Ausführungsform nach Figur 1 und haben daher in Figur 2 identische Bezugszahlen. Unterschiedlich ist lediglich ein hinteres Auffangelement 33', das gegenüber der ersten Ausführungsform kürzer ausgebildet ist, da es nicht zugleich auch als vorderes Auffangelement für eine hintere Reihe dienen muss.

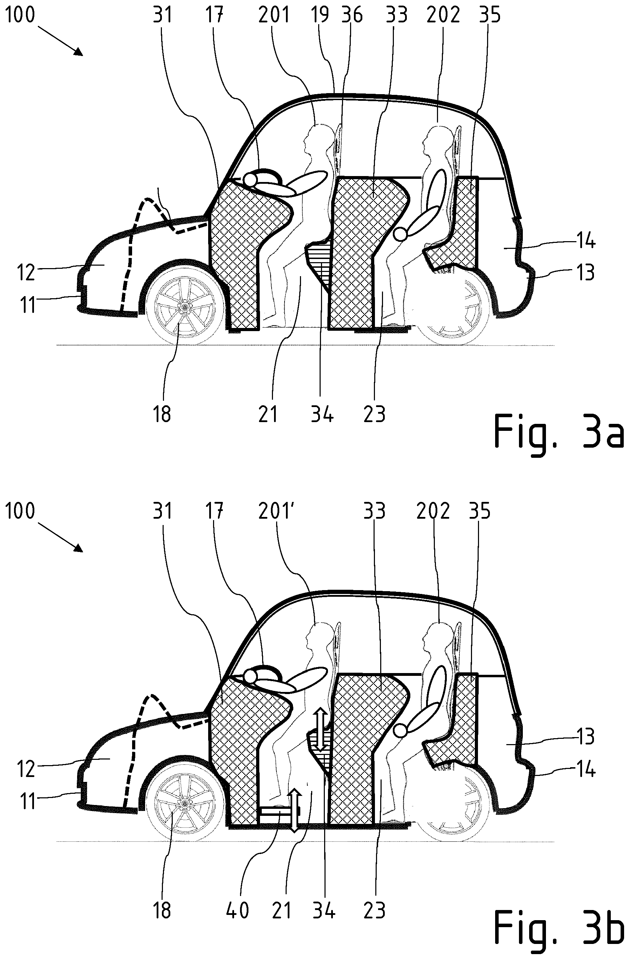

Figur 3a zeigt das Fahrzeug 100 für vier Personen gemäß Figur 1 in einer Seitenansicht, wobei die Türen nicht dargestellt sind. Front- und Heckbereiche 11, 13 sowie das dazwischen ausgebildete Fahrzeugchassis mit Rädern 18 besitzen die Kontur eines üblichen Mittelklassekompaktwagens zur sitzenden Beförderung und sind hiervon unverändert übernommen, um die Größenverhältnisse für die erfindungsgemäße Ausstattung mit Stehplätzen 21, 23 darzustellen. Ein Fahrzeugdach 19 erstreckt sich daher wesentlich weiter nach oben als bei einer herkömmlichen Fahrgastzelle mit Sitzplätzen.

An einem Stehplatz 21 steht der Fahrer 201 auf dem Fahrzeugboden und lehnt sich an das hinter ihm liegende Auffangelement 33 an, wobei das Gesäß an einem kleinen Stehsitz 34 abgestützt werden kann. Der Fahrer 201 kann so eine entspannte, stehend-angelehnte Haltung einnehmen und muss auch nicht viel Kraft aufzuwenden, um sich gegen die im normalen Fahrbetrieb auftretenden Beschleunigungen und Verzögerungen abzustützen. Das vordere Auffangelement 31, das hintere Auffangelement 33 und auch der Stehsitz 34 sind aus weichen, nachgiebigen Werkstoffen gebildet, wie beispielsweise offenzelligen Schaumstoffen, die sich zumindest oberflächlich elastisch verformen, und/oder bestehen aus hochviskosen Formmassen oder aus kollabierenden Strukturen, bei denen beim Anprall des Körpers des Fahrers 201 eine plastische Verformung eintritt.

Erkennbar ist in Figur 3a auch, dass sich das vordere Auffangelement 31 dem Fahrer 201 entgegenstreckt und dabei mit der oberen Fläche schräg nach unten abfällt, so dass eine Armauflage geschaffen wird, auf der das Lenkrad 17 positioniert ist. Der Fahrer 201 kann das Lenkrad 17 bequem greifen, da es sich auf Schulterhöhe oder sogar etwas darunter befindet. Die seitliche Kontur des Auffangelements 33 folgt der Körperhaltung des Fahrers 201, so dass zwischen Auffangelement 33 und dem Fahrer 201 möglichst wenig freier Raum vorliegt, den der Körper bei einem Unfall erst durchqueren muss, bevor er an dem Auffangelement 33 zurückgehalten wird. Lediglich der rückwärtige Bereich des Fußraums am Stehplatz 21 ist größer ausgebildet, um ein Einquetschen der unteren Extremitäten durch Fahrzeugteile, die in den Fußraum eindringen, zu verhindern.

Am hinteren Stehplatz 23 beschreibt das Auffangelement an der einem Fahrgast 202 zugewandten Rückseite eine ähnliche Kontur. Ein höhenverstellbarer Stehsitz ist hier nicht erforderlich; der Stehsitz ist direkt an das hintere Auffangelement 35 angeformt.

Sind die Türen geöffnet, bestehen die in Fig. 3a sichtbaren Ausstiegslücken zwischen den Auffangelementen 31 und 33 bzw. 33 und 35, durch die das Ein- und Aussteigen bequem möglich ist.

In Fig. 3b ist der Fahrer 201' etwas kleiner als der Fahrer in Fig. 3a. Dazu kann er zunächst den Stehsitz 34 in der Höhe anpassen. Die Höhenverstellbarkeit des Stehsitzes 34 am Stehplatz 21 über den Doppelpfeil angedeutet. Außerdem steht er auf einem höhenverstellbaren Fußpodest 40, so dass die gegenüber dem Fahrzeugboden gemessene Höhe seiner Schulter ungefähr der Schulterhöhe des größeren Fahrers ähnelt.

Den Darstellungen in Fig. 3a, 3b ist jeweils zu entnehmen, wie hoch sich die Auffangelemente 31, 33, 35 erstrecken, so dass der Körperschwerpunkt von Fahrern 201, 201' und Fahrgästen 202 in dem durch die Rückhaltevorrichtung um den Körper herum gebildeten Ring liegt. Vorzugsweise erstrecken sich die Auffangelemente bis mindestens auf Höhe des Brustbeins und enden damit nur wenig unterhalb der Schultergelenke. Hierdurch wird nicht nur sichergestellt, dass bei einem Unfall der Körperschwerpunkt und insbesondere der Rumpfschwerpunkt von den Auffangelementen aufgehalten werden, sondern es wird auch die breite Anprallfläche des Rumpfes möglichst weit ausgenutzt, um eine Lastverteilung auf die Fläche zu bewirken und eine lokale Überbeanspruchung zu vermeiden.

Bei den Fahrgästen 202 prallt der Kopf während des Unfalls möglicherweise gegen das vordere Auffangelement 33, das aber nachgiebig ausgebildet ist. Nur beim Stehplatz 21 für den Fahrer kann das Auffangelement 31 nicht ganz so weit hoch gezogen werden, um eine gute Sicht und eine bequeme Bedienung des Lenkrads 17 zu ermöglichen. Hier kann ein zusätzlicher Lenkradairbag sinnvoll sein oder ein Lenkerbügel verwendet werden, der außerhalb der Reichweite des Kopfes angeordnet ist.

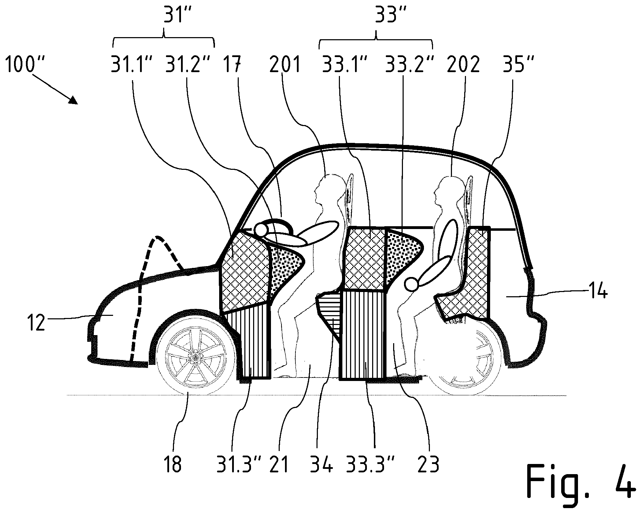

Figur 4 zeigt eine weitere Ausführungsform eines Personenwagens 100" für bis zu vier Personen. Die Auffangelemente 31", 33", 35" sind hinsichtlich Kontur und Funktion ähnlich zu der zuvor mit Bezug auf die Fig. 3a, 3b beschriebenen Ausführungsform. Unterschiedlich ist der innere Aufbau der Auffangelemente 31", 33".

Das Auffangelement 31" am Stehplatz 21 für den Fahrer 201 ist sowohl in Fahrzeuglängsrichtung wie auch in Bezug auf die Hochachse in unterschiedliche Schichten unterteilt, die unterschiedlich nachgiebig ausgebildet sind. Ein Anprallbereich 31.2", der bei einem Unfall als erstes Körperkontakt bekommt, ist im Vergleich zu einer vorderen Schicht 31.1" weich ausgebildet, um sich möglichst schnell und möglichst vollflächig an den Körper anzulehnen. Dadurch wird der Körper gleichmäßig mit seiner gesamten frontalen Fläche belastet und der von dem Körper ausgehende Impuls verteilt sich auf eine maximale Fläche, bevor er auf die etwas härtere vordere Schicht 31.1" trifft, an der er weiter verzögert wird.

In der zweiten Unfallphase wird der Körper zurückgeschleudert und von den hinter ihm angeordneten Auffangelementen 33", 35" aufgefangen. Der Fahrer 201 prallt dabei gegen die Schicht 33.1" und der Fahrgast 202 gegen das hintere Auffangelement 35".

Eine dritte Schicht 31.3", 33.3" besteht bei beiden Auffangelementen 31", 33" jeweils im Bereich des Fußraums. Der von den unteren Extremitäten ausgehende Impuls ist aufgrund der geringeren Masse kleiner als im Rumpfbereich. Dadurch kann die den Beinen und Füßen zugeordnete untere Schicht 31.3" in Fahrzeuglängsrichtung dünner ausgebildet sein als oben und/oder die Schicht 31.3" kann weicher ausgebildet sein.

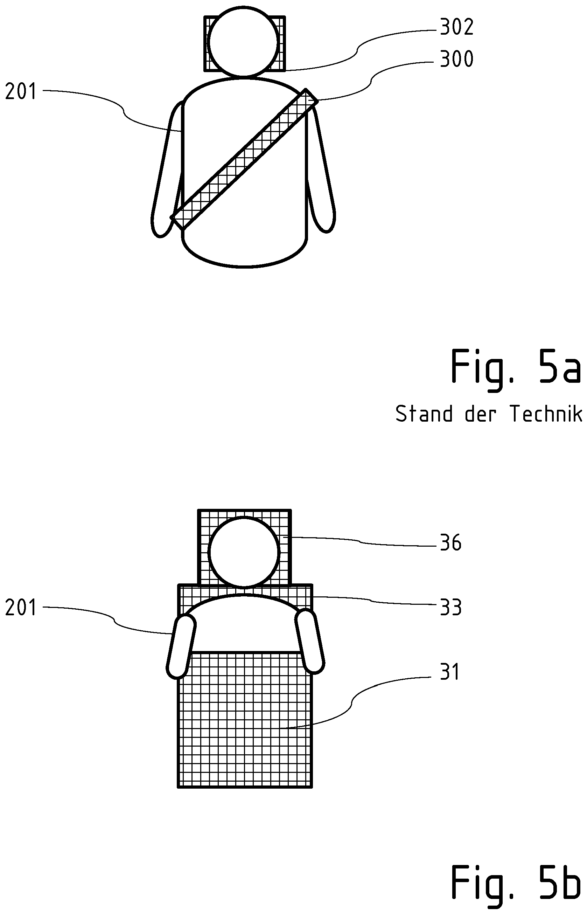

Fig. 5a zeigt einen sitzenden Fahrzeuginsassen aus Blickrichtung von vorn in einem herkömmlichen Fahrzeug. Der Oberkörper wird mit einem Sicherheitsgurt 300 zurückgehalten, der aber in Relation zur frontalen Körperoberfläche sehr schmal ist, so dass die über den Gurt wirkenden Verzögerungskräfte auf einen streifenförmigen Bereich des Körpers wirken und dort zu lokalen Verletzungen führen können, selbst wenn die Gesamtverzögerung in Folge des Unfallgeschehens unterhalb von kritischen Grenzwerten liegen sollte. Auch der Kopf des Fahrzeuginsassen 201 ist durch die üblicherweise vorhandene Kopfstütze 302 nicht vollflächig abgestützt, da bereits die projizierte Fläche der Kopfstütze 302 eine geringere Höhe hat als die Kopfhöhe. Dies resultiert daher, dass der konkave Hinterkopf ohnehin nicht flächig anliegt und daher eher punktuell abgestützt wird. Der zwischen Schulter und Hinterkopf liegende Nackenbereich wird in den seltensten Fällen durch die Kopfstütze abgestützt.

Fig. 5b zeigt hingegen einen Fahrer 201 aus der Ansicht von vorn in einem Stehplatz nach der Erfindung, wobei wiederum die Stützflächen, welche durch die Auffangelemente 31 und 36 bereitgestellt werden, durch die schraffierten Flächenbereiche gekennzeichnet sind. Das vordere und das hintere Auffangelement 31, 33 sind breiter als der Körper des Fahrers 201, so dass dieser über die gesamte Körperbreite abgestützt wird. Weiterhin wird ein Großteil der Körperhöhe abgestützt, nämlich zumindest der Bereich des Oberkörpers bis kurz unterhalb der Schultern, um eine gewisse Bewegungsfreiheit zu sichern. Eine weitere Abstützung am Bein- und Unterleibbereich kann durch das sich nach unten erstreckende vordere Auffangelement, das hier nicht dargestellt ist, bewirkt werden. Auch die rückwertige Seite des Körpers wird komplett abgedeckt, denn auch dort ist das Auffangelement 33 breiter gestaltet als der Körper des Fahrers 201. Im Bereich der Kopfstütze 36 kann die Breite etwas reduziert sein, um insbesondere den Blick der Fondpassagiere nicht vollständig zu versperren

Auch hierbei ist vorteilhaft, dass das Auffangelement 33 im Rücken des Fahrers 201 für eine flächige Anlage an den Körper sorgt und die Verzögerungskräfte damit gleichmäßig auf den gesamten Körper verteilt, auch wenn dies im Rückenbereich auf Grund der dort recht starken Muskulatur weniger kritisch ist, als im vorderen Rumpfbereich mit den dort liegenden Organen.

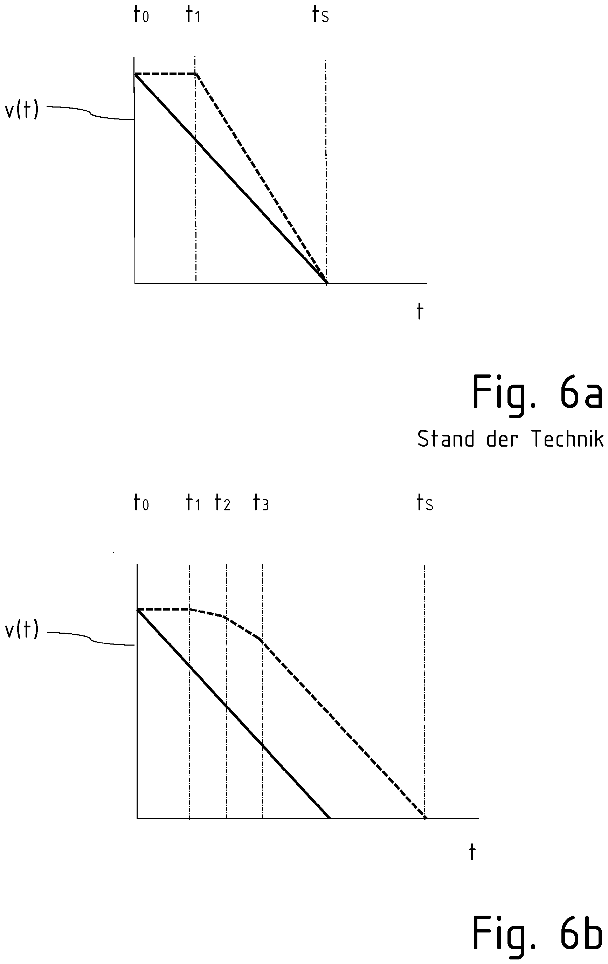

Fig. 6a zeigt in einer schematischen Darstellung den Geschwindigkeitsverlauf eines Fahrzeugs gemäß dem Stand der Technik über der Zeit als durchgezogene Linie sowie eines Fahrzeuginsassen als gestrichelte Linie.

Zu einem Unfallzeitpunkt t₀ findet der Zusammenstoß mit dem Hindernis statt und es beginnt unmittelbar die Verzögerung des Fahrzeugs bis zum Stillstand zum Zeitpunkt t_{S}. Zur Vereinfachung ist hier die Abnahme der Fahrzeuggeschwindigkeit v(t) als gerade Linie dargestellt, auch wenn sich in einem realen Unfallgeschehen unterschiedliche Teilabläufe ergeben, je nachdem welche Bereiche des Fahrzeugs gerade verformt werden. Die Steigung dieser idealisierten Linie entspricht der Verzögerung, die auf das Fahrzeug wirkt.

Die Geschwindigkeit eines Fahrzeuginsassen ist mit der gestrichelten Linie dargestellt. Der Körper weist zum Unfallzeitpunkt t₀ dieselbe Geschwindigkeit auf wie das Fahrzeug, in dem er sitzt. Es vergeht jedoch eine Zeitspanne bis zu einem Zeitpunkt t₀, die der sogenannten Gurtlosen entspricht. Der Körper bewegt sich zunächst mit der ihm aufgeprägten Geschwindigkeit im Raum weiterbewegt, bevor die Rückhaltesysteme greifen und der Verzögerungsvorgang beginnt. Die Zeitspanne von T 0 bis T 1 kann durch verbesserte Rückhaltesystem, wie Gurtstraffer, Airbag usw. verkürzt werden, was an sich bekannt ist und daher hier keiner näheren Erläuterung bedarf. Wesentlich ist aber, dass in einem herkömmlichen Fahrzeug, bei dem die Fahrzeuginsassen über Rückhaltesysteme mit der Fahrzeugzelle verbunden sind, bei Stillstand des Fahrzeugs zum Zeitpunkt t_{S} auch der Körper der Fahrzeuginsassen zum Stillstand gekommen sein muss. Da der Verzögerungsvorgang aber später einsetzt, ergibt sich eine deutlich höhere Steigung der Linie zwischen den Punkten t₁ und t_{S}, mithin eine stärkere Verzögerung und somit deutlich erhöhte Kräfte.

In Fig. 6b ist in ähnlicher Weise das Verzögerungsverfall eines erfindungsgemäßen Fahrzeugs und eines auf einem Stehplatz darin reisenden Fahrzeuginsassen dargestellt. Auch hier gilt die idealisierte Annahme, dass die zum Unfallzeitpunkt to bestehende Fahrzeuggeschwindigkeit linear bis auf null zu einem Stillstandzeitpunkt t_{S} reduziert wird. Die Verzögerung des Körpers des Fahrzeuginsassen ist wiederum durch die gestrichelte Linie dargestellt.

Auch bei dem erfindungsgemäßen Fahrzeug ergibt sich ein Zeitpunkt t₁, bis zu dem der Körper mit der ursprünglichen Reisegeschwindigkeit weiterbewegt wird. Die Zeitspanne hängt im Wesentlichen davon ab, wie nah der Fahrzeuginsasse zu den Auffangelementen positioniert ist. Anders als im Stand der Technik, wo der Zeitverlust zwischen t₀ und t₁ dazu führt, dass die Insassenbelastung höher ist als die Fahrzeugbelastung, kommt es erfindungsgemäß aber nicht wesentlich hierauf an, da der weitere Verlauf der Verzögerung durch die Auffangelemente bestimmt wird und nicht durch die Fahrzeugzelle.

In der Phase zwischen t₁ und t₂ wird der Körper an der vorderen Schicht des Auffangelements aufgehalten. Es ergibt sich zunächst der Effekt der flächigen Anlage aller Körperteile, um die Druckbelastung gleichmäßig auf den Körper wirken zu lassen. Entsprechend der geringen Steigung ist die Verzögerungswirkung in dieser Phase noch gering.

Beispielhaft ist eine weitere Phase von t₂ nach t₃ dargestellt, bei der eine weitere Schicht komprimiert wird, die etwas steifer ausgelegt ist und damit zu einer stärkeren Verzögerung führt.

Durch diese Abstufung wird der Übergang in der Verzögerung von dem sehr abrupten Verlauf, wie er im Stand der Technik gemäß Fig. 6a vorherrscht, auf einen nahezu stetigen Übergang gemäß der vorliegenden Erfindung abgemildert. Es können sich hierzu weitere Schichtfolgen mit unterschiedlichen Elastizitäten und Energieabsorptionsverhalten anschließen.

Zur Erläuterung der Erfindung ist in Fig. 6b jedoch nur eine Hauptzeitspanne zwischen dem Zeitpunkt t₃, an dem die letzte Schicht erstmalig komprimiert wird und dem Stillstand des Körpers über Grund zum Zeitpunkt t₄ dargestellt. Beispielhaft ist die Verzögerung bis dorthin etwa gleichartig wie der der Fahrzeugzelle, jedoch zeitversetzt dazu, da die elastisch oder plastisch verformbaren Schichten in den Auffangelementen quasi eine reine Personen-Knautschzone bereitstellen, in der sich der Körper relativ zum verunfallten Fahrzeug weiterbewegen kann, so dass er eben später zum absoluten Stillstand kommt als das Fahrzeug selbst.

In dem also ermöglicht wird, den Körper der Fahrzeuginsassen über einen längeren Zeitraum zu verzögern als im Stand der Technik möglich, weil die Bindung an die Fahrzeugzelle aufgehoben wird, können niedrigere negative Beschleunigungen und damit niedrigere Kräfte erreicht werden. Die niedrigeren Kräfte werden zudem auf eine größere Fläche des Körpers verteilt, so dass die Druckbelastung von Körperpartien gegenüber herkömmlichen Fahrzeugen deutlich reduziert ist.

## Patentansprüche

1. Fahrzeug (100; 100'; 100"), mit wenigstens einem Stehplatz (21, 22, 23, 24) für einen stehenden Fahrer (201; 201') und/oder einen stehenden Fahrgast (20), mit einem Frontbereich (11), der wenigstens eine Stoßenergie absorbierende Knautschzone (12) aufweist,
**dadurch gekennzeichnet, dass** jeder Stehplatz (21, 22, 23, 24) in Fahrtrichtung gesehen jenseits der Knautschzone (12) angeordnet ist und wenigstens teilweise von einer außerhalb der Knautschzone (12) angeordneten Personenrückhalteeinrichtung umgeben ist, welche wenigstens je ein vorderes und ein hinteres Auffangelement (31, 33, 35) umfasst, das jeweils stoßabsorbierend ausgebildet ist und das sich vom Fußbereich bis über einen Körperschwerpunkt des Fahrers (201) oder Fahrgastes (202) hinaus nach oben erstreckt.

2. Fahrzeug (100; 100') nach Anspruch 1, **dadurch gekennzeichnet, dass** sich die vordere Auffangeinrichtung (31, 33) zumindest am Fahrerplatz (21) bis unterhalb des Schultergelenks des Fahrers (201) erstreckt.

3. Fahrzeug (100; 100') nach Anspruch 1 oder 2, **dadurch gekennzeichnet, dass** wenigstens ein Zusatz-Auffangelement (32.1 ... 32.4) an dem Stehplatz (21, 22, 23, 24) vorgesehen ist, das bei geschlossener Fahrzeugtür (15) eine zwischen dem jeweiligen vorderen und dem hinteren Auffangelement (31, 33, 35) des Stehplatzes (21, 22, 23, 24) gebildeten Ausstiegslücke schließt.

4. Fahrzeug (100; 100') nach Anspruch 3, **dadurch gekennzeichnet, dass** das Zusatz-Auffangelement (32.1 ... 32.4) an der jeweiligen Innenseite der Fahrzeugtüren (15.1 ... 15.4) angebracht ist.

5. Fahrzeug (100") nach einem der vorhergehenden Ansprüche, **gekennzeichnet durch** einen Heckbereich (13) mit einer Stoßenergie absorbierenden Knautschzone (14).

6. Fahrzeug (100") nach einem der vorhergehenden Ansprüche, **dadurch gekennzeichnet, dass** wenigstens eines der Auffangelemente (31", 33", 35") mehrere Schichten (31.1", 31.2", 31.3"; 33.1", 33.2", 33.3") mit unterschiedlichen Härtegraden aufweist.

7. Fahrzeug (100") nach einem der vorhergehenden Ansprüche, **dadurch gekennzeichnet, dass** wenigstens ein Auffangelement (31, 33, 35; 31", 33", 35") in Bezug auf die Fahrzeuglängs- und/oder die Fahrzeugquerachse verstellbar ist.

8. Fahrzeug (100") nach einem der vorhergehenden Ansprüche, **dadurch gekennzeichnet, dass** an wenigstens einem Stehplatz (21, 22, 23, 24) ein höhenverstellbares Fußpodest (40) vorgesehen ist und der Stehsitz (34) höhenverstellbar ist.

9. Fahrzeug (100") nach einem der vorhergehenden Ansprüche, **dadurch gekennzeichnet, dass** sich die Auffangelemente (31, 33, 35; 31", 33", 35") vom Fußbereich bis mindestens auf Höhe des Brustbeins des Fahrers (201) oder Fahrgastes (202) nach oben erstrecken.

10. Fahrzeug (100") nach einem der vorhergehenden Ansprüche, **dadurch gekennzeichnet, dass** die Auffangelemente (31, 33, 35; 31", 33", 35") aus elastisch oder plastisch verformbaren Werkstoffen bestehen und im Inneren frei von harten Versteifungselementen sind.

## Claims

1. Vehicle (100; 100'; 100"), having at least one standing place (21, 22, 23, 24) for a standing driver (201; 201') and/or a standing passenger (20), and having a front region (11) which has at least one impact energy-absorbing crumple zone (12),
**characterized in that**, as viewed in the direction of travel, each standing place (21, 22, 23, 24) is arranged beyond the crumple zone (12) and is at least partially surrounded by a person-retaining device arranged outside the crumple zone (12), said person-retaining device comprising in each case at least one front and one rear cushioning element (31, 33, 35) which are each designed to absorb impacts and which extend upwardly from the foot region up to a point beyond a centre of gravity of the body of the driver (201) or passenger (202).

2. Vehicle (100; 100') according to Claim 1, **characterized in that** the front cushioning device (31, 33) extends, at least at the driver's place (21), to a point below the shoulder joint of the driver (201).

3. Vehicle (100; 100') according to Claim 1 or 2, **characterized in that** at least one additional cushioning element (32.1 ... 32.4) is provided at the standing place (21, 22, 23, 24) and, with the vehicle door (15) closed, closes an exit gap formed between the respective front and the rear cushioning element (31, 33, 35) of the standing place (21, 22, 23, 24).

4. Vehicle (100; 100') according to Claim 3, **characterized in that** the additional cushioning element (32.1 ... 32.4) is mounted on the respective inner side of the vehicle doors (15.1 ... 15.4).

5. Vehicle (100") according to one of the preceding claims, **characterized by** a rear region (13) having an impact energy-absorbing crumple zone (14).

6. Vehicle (100") according to one of the preceding claims, **characterized in that** at least one of the cushioning elements (31", 33", 35") has a plurality of layers (31.1", 31.2", 31.3"; 33.1", 33.2", 33.3") with different degrees of hardness.

7. Vehicle (100") according to one of the preceding claims, **characterized in that** at least one cushioning element (31, 33, 35; 31", 33", 35") is adjustable with respect to the longitudinal axis and/or the transverse axis of the vehicle.

8. Vehicle (100") according to one of the preceding claims, **characterized in that** a height-adjustable foot pedestal (40) is provided at at least one standing place (21, 22, 23, 24), and the standing seat (34) is height-adjustable.

9. Vehicle (100") according to one of the preceding claims, **characterized in that** the cushioning elements (31, 33, 35; 31", 33", 35") extend upwards from the foot region to at least the height of the breastbone of the driver (201) or passenger (202).

10. Vehicle (100") according to one of the preceding claims, **characterized in that** the cushioning elements (31, 33, 35; 31", 33", 35") consist of elastically or plastically deformable materials and are free from hard stiffening elements on the inside.

## Revendications

1. Véhicule (100; 100'; 100") comprenant au moins une place debout (21, 22, 23, 24) pour un conducteur debout (201; 201') et/ou un passager debout (20), avec une région avant (11), qui présente au moins une zone déformable (12) absorbant l'énergie d'un impact, **caractérisé en ce que** chaque place debout (21, 22, 23, 24), considérée dans la direction de roulage, est disposée de l'autre côté de la zone déformable (12) et est entourée au moins en partie par un système de retenue des personnes agencé hors de la zone déformable (12), qui comprend au moins un élément de retenue avant et arrière (31, 33, 35), qui est réalisé respectivement de façon à absorber un impact et qui s'étend depuis la région des pieds jusqu'au-dessus d'un centre de gravité du corps du conducteur (201) ou du passager (202).

2. Véhicule (100; 100') selon la revendication 1, **caractérisé en ce que** le système de retenue avant (31, 33) s'étend au moins à la place du conducteur (21) jusqu'en dessous de l'articulation de l'épaule du conducteur (201).

3. Véhicule (100; 100') selon la revendication 1 ou 2, **caractérisé en ce qu'**il est prévu à la place debout (21, 22, 23, 24) au moins un élément de retenue supplémentaire (32.1, ..., 32.4) qui, lorsque la porte (15) du véhicule est fermée, ferme une ouverture de sortie formée entre l'élément de retenue avant et arrière respectif (31, 33, 35) de la place debout (21, 22, 23, 24).

4. Véhicule (100; 100') selon la revendication 3, **caractérisé en ce que** l'élément de retenue supplémentaire (32.1, ..., 32.4) est placé sur le côté intérieur respectif des portes (15.1, ..., 15.4) du véhicule.

5. Véhicule (100") selon l'une quelconque des revendications précédentes, **caractérisé par** une région arrière (13) comportant une zone déformable (14) absorbant l'énergie d'un impact.

6. Véhicule (100") selon l'une quelconque des revendications précédentes, **caractérisé en ce qu'**au moins un des éléments de retenue (31", 33", 35") présente plusieurs couches (31.1", 31.2", 31.3"; 33.1", 33.2", 33.3") de niveaux de dureté différents.

7. Véhicule (100") selon l'une quelconque des revendications précédentes, **caractérisé en ce qu'**au moins un élément de retenue (31, 33, 35; 31", 33", 35") est déplaçable par rapport à l'axe longitudinal du véhicule et/ou à l'axe transversal du véhicule.

8. Véhicule (100") selon l'une quelconque des revendications précédentes, **caractérisé en ce qu'**il est prévu un pose-pieds réglable en hauteur (40) à au moins une place debout (21, 22, 23, 24) et le siège debout (34) est réglable en hauteur.

9. Véhicule (100") selon l'une quelconque des revendications précédentes, **caractérisé en ce que** les éléments de retenue (31, 33, 35; 31", 33", 35") s'étendent vers le haut depuis la région des pieds au moins jusqu'à la hauteur du sternum du conducteur (201) ou du passager (202).

10. Véhicule (100") selon l'une quelconque des revendications précédentes, **caractérisé en ce que** les éléments de retenue (31, 33, 35; 31", 33", 35") sont constitués de matériaux élastiquement ou plastiquement déformables et sont dépourvus intérieurement d'éléments de renfort durs.
